# EUROPEAN PATENT SPECIFICATION

(11) **EP 4 478 351 B1**
(45) Date of publication and mention of the grant of the patent: **28.01.2026**
(21) Application number: 23791290.2
(22) Date of filing: 19.04.2023
(51) Int. Cl.: G10L 15/22, G10L 15/20, G06F 3/16, G10L 15/08

(54) **VOICE INTERACTION METHOD, AND ELECTRONIC DEVICE AND STORAGE MEDIUM**
SPRACHINTERAKTIONSVERFAHREN SOWIE ELEKTRONISCHE VORRICHTUNG UND SPEICHERMEDIUM
PROCÉDÉ D'INTERACTION VOCALE, DISPOSITIF ÉLECTRONIQUE ET SUPPORT DE STOCKAGE

(30) Priority: 22.04.2022 CN 202210430483
(43) Date of publication of application: 18.12.2024
(73) Proprietor: Huawei Technologies Co., Ltd., Shenzhen, Guangdong 518129 (CN)
(72) Inventor: WU, Pengyang, Shenzhen, Guangdong 518129 (CN); ZENG, Junfei, Shenzhen, Guangdong 518129 (CN)
(74) Representative: Grünecker Patent- und Rechtsanwälte PartG mbB
(86) International application number: PCT/CN2023/089278
(87) International publication number: WO 2023/202635

(56) References cited:
- WO-A1-2022/022139
- CN-A- 110 875 060
- CN-A- 111 243 585
- CN-A- 111 694 433
- CN-A- 112 739 507
- US-A1- 2023 013 740
- WREDE BRITTA ET AL: "Prediction of Next-Utterance Timing using Head Movement in Multi-Party Meetings", PROCEEDINGS OF THE 5TH INTERNATIONAL CONFERENCE ON HUMAN AGENT INTERACTION, 27 October 2017 (2017-10-27), New York, New York, USA, pages 181 - 187, XP093244118, ISBN: 978-1-4503-5113-3

## Description

### THE PRESENT DISCLOSURETECHNICAL FIELD

The present disclosure relates to the field of software technologies, and in particular, to a voice interaction method, an electronic device, and a computer-readable storage medium.

### BACKGROUND

With development of audio processing technologies and artificial intelligence (Artificial Intelligence, AI), an increasing quantity of electronic devices (such as smart speakers and smart robots) have a voice interaction function. In a process of voice interaction, the electronic device needs to collect a user voice. To improve accuracy of voice collection, the electronic device collects a voice in a target direction (namely, a direction in which a current interactor is located), and suppresses a voice in a direction other than the target direction, to reduce interference of environmental noise on a user voice signal. WO 2022/022139A1 relates to a voice detection method based on multiple sound regions, a related device, and a storage medium, applied to the field of artificial intelligence. Technical paper Wrede, Britta et al., "Prediction of Next-Utterance Timing using Head Movement in Multi-Party Meetings", Proceedings of the 5th International Conference on Human Agent Interaction, 27 October 2017, pages 181-187, New York, New York USA, relates to a relationship between the head movements of participants and the start of the next utterance in turn-changing in multi-party analysis.

In some cases, the electronic device may be in a multi-user interaction scenario. To be specific, in addition to the current interactor, there is another user around the electronic device (referred to as a "potential interactor") that may perform voice interaction with the electronic device. Because the electronic device collects only the voice in the direction in which the current interactor is located, a voice of the potential interactor is suppressed. When the potential interactor speaks, the electronic device cannot sense voice content of the potential interactor, and therefore cannot respond to the potential interactor.

### SUMMARY

Some implementations of the present disclosure provide a voice interaction method, an electronic device, and a computer-readable storage medium. The following describes the present disclosure from a plurality of aspects. For implementations and beneficial effects of the following plurality of aspects, refer to each other. The present invention is defined according to the independent claims. The dependent claims recite advantageous embodiments of the present invention.

According to a first aspect, an implementation of the present disclosure provides a voice interaction method, applied to an electronic device. The method includes: performing voice interaction with a first user, and collecting, in a voice collection time period of the voice interaction, a first audio signal in an angle range in which the first user is located and a second audio signal in an angle range in which a second user is located, where the second user is a user who performs voice interaction with the electronic device within a specified historical time period; determining whether a start moment of a first voice signal in the first audio signal is within a first time period, and determining a target voice signal from the first voice signal and a second voice signal based on a determining result, where the second voice signal is a voice signal included in the second audio signal, and the first time period is a time period of first duration after a start moment of the voice collection time period; and responding to the target voice signal.

According to an implementation of the present disclosure, a target interactor may be determined from the first user and the second user based on the first duration, so that a voice interaction requirement of the first user and a voice interaction requirement of the second user can be properly considered, and the target interactor is accurately determined, thereby improving user experience in a multi-person interaction scenario.

In some implementations, at least one of the start moment of the first voice signal and a start moment of the second voice signal is within the first time period; and the determining a target voice signal from the first voice signal and the second voice signal based on a determining result includes: if the start moment of the first voice signal is within the first time period, determining the first voice signal as the target voice signal; or otherwise, determining the target voice signal based on a status of overlap between the second voice signal and the first voice signal in time.

According to an implementation of the present disclosure, provided that the first user speaks within the first time period, the electronic device determines the first user as the target interactor (that is, keeps the first user as a current interactor unchanged), to preferentially meet the voice interaction requirement of the first user.

If the first user does not speak within the first time period, it is considered that the first user has a low interaction intention, and therefore the second user may be determined as the target interactor, to consider the voice interaction requirement of the second user.

In some implementations, the determining the target voice signal based on a status of overlap between the second voice signal and the first voice signal in time includes: if the second voice signal and the first voice signal overlap in time, determining the first voice signal as the target voice signal; or if the second voice signal and the first voice signal do not overlap in time, determining the second voice signal as the target voice signal.

In some implementations, the first duration is determined based on an interaction intention value P of the first user and/or a quantity M of interactions between the first user and the electronic device within a specified time period, where the interaction intention value P represents an intention of the first user to perform voice interaction with the electronic device.

In some implementations, the interaction intention value P is determined based on a face angle of the first user and/or a distance between the first user and the electronic device.

In some implementations, the first duration is k₁×P+k₂×min{M, n}, where k₁ and k₂ are preset constants, and n is an integer from 3 to 6.

In some implementations, the second voice signal does not include a wake-up word of the electronic device.

In some implementations, the specified historical time period is a time period of second duration before a start moment of the voice collection time period.

According to a second aspect, an implementation of the present disclosure provides an electronic device, including: a memory, configured to store instructions executed by one or more processors of the electronic device; and a processor, where when the processor executes the instructions in the memory, the electronic device is enabled to perform the voice interaction method provided in any implementation of the first aspect of the present disclosure. For beneficial effects that can be achieved in the second aspect, refer to beneficial effects of any implementation of the first aspect of the present disclosure. Details are not described herein again.

According to a third aspect, an implementation of the present disclosure provides a computer-readable storage medium, where the computer-readable storage medium stores instructions; and when the instructions are executed on a computer, the computer is enabled to perform the voice interaction method provided in any implementation of the first aspect of the present disclosure. For beneficial effects that can be achieved in the third aspect, refer to beneficial effects of any implementation of the first aspect of the present disclosure. Details are not described herein again.

### BRIEF DESCRIPTION OF DRAWINGS

FIG. 1 shows an example application scenario according to an embodiment of the present disclosure;
FIG. 2 is a diagram of an example structure of an electronic device according to an embodiment of the present disclosure;
FIG. 3 is an example flowchart of a voice interaction method according to an embodiment of the present disclosure;
FIG. 4 is a diagram of a time sequence of performing voice interaction between an electronic device and a current interactor according to an embodiment of the present disclosure;
FIG. 5 is an example flowchart of a user voice collection process according to an embodiment of the present disclosure;
FIG. 6 is a diagram of an angle range in which a user is located according to an embodiment of the present disclosure;
FIG. 7 is an example flowchart of a target voice signal determining method according to an embodiment of the present disclosure;
FIG. 8A is a diagram 1 of a target voice signal determining rule according to an embodiment of the present disclosure;
FIG. 8B is a diagram 2 of a target voice signal determining rule according to an embodiment of the present disclosure;
FIG. 9 is a diagram 3 of a target voice signal determining rule according to an embodiment of the present disclosure;
FIG. 10A is a diagram 4 of a target voice signal determining rule according to an embodiment of the present disclosure;
FIG. 10B is a diagram 5 of a target voice signal determining rule according to an embodiment of the present disclosure;
FIG. 11 shows another example application scenario according to an embodiment of the present disclosure;
FIG. 12 is a diagram of a voice interaction method according to some embodiments;
FIG. 13 is a diagram of a voice interaction method according to some other embodiments;
FIG. 14 is a block diagram of an electronic device according to an implementation of the present disclosure; and
FIG. 15 is a diagram of a structure of a system on chip (System on Chip, SOC) according to an implementation of the present disclosure.

### DESCRIPTION OF EMBODIMENTS

The following describes specific implementations of the present disclosure in detail with reference to accompanying drawings.

For ease of understanding, an audio processing technology that may be used in the present disclosure is first described.
(1) Beamforming: A beamforming technology can determine a direction of a sound source. The beamforming technology depends on a microphone array. When the sound source makes a sound, there is a delay in a sound signal received by each microphone (namely, each sound collection channel) in the microphone array, and the beamforming technology can locate the sound source (for example, determine a direction angle, an elevation angle, and a distance of the sound source) by using delay information of each channel.

The beamforming technology may further collect a sound in a target angle. The beamforming technology can perform processing such as phase shifting and weighting on the sound signal of each channel in the microphone array. In this case, objectives of enhancing the sound signal in the target angle and suppressing a sound signal in another direction can be implemented, to implement sound collection in the target angle (for example, within ±30° in front of the electronic device).

(2) Voice activity detection (Voice Activity Detection, VAD) is also referred to as "voice boundary detection" or "endpoint detection". The voice activity detection technology can distinguish a voice signal from a non-voice signal in an audio signal, and can determine a start point and an end point of the voice signal, to separate the voice signal from the audio signal. In this way, subsequent voice recognition may be performed only on the voice signal. This improves accuracy of voice recognition.

An implementation of the present disclosure is used to provide a voice interaction method, to determine an appropriate target interactor in a multi-person interaction scenario, and meet a voice interaction requirement of a user.

In the present disclosure, the electronic device may be a device in any form such as a smart speaker, an in-vehicle infotainment, a large-screen device, a mobile phone, a tablet, a wearable device, or a camera, provided that the electronic device has a voice interaction function. In the following, an intelligent robot (for example, Xiaoyi robot) is used as an example of the electronic device.

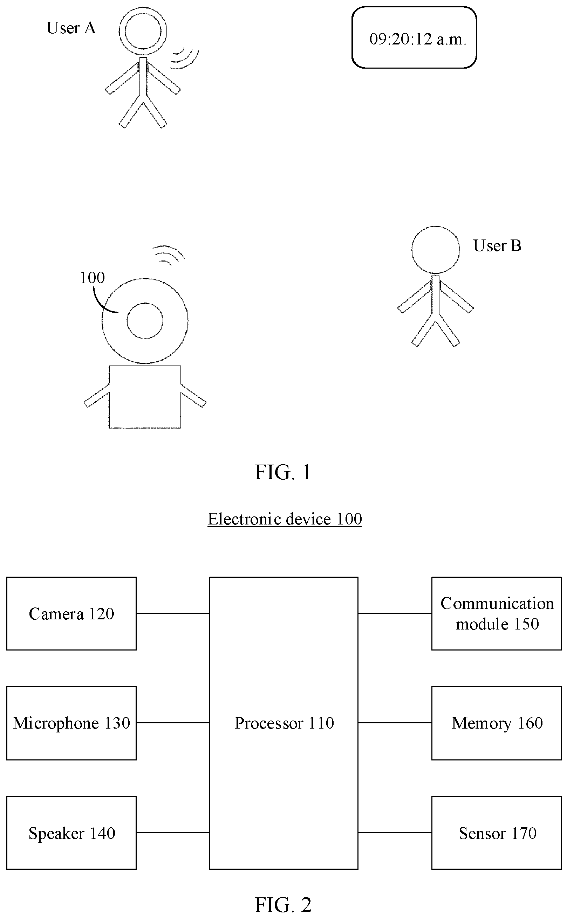

FIG. 1 shows an example application scenario according to an embodiment of the present disclosure. In FIG. 1, an electronic device 100 (specifically, an intelligent robot) is performing voice interaction ("interaction" for short) with a user A. That is, the user A is a current interactor of the electronic device 100. For ease of interaction, the user A is located in front of the electronic device 100. Interaction content between the electronic device 100 and the user A is, for example:
User A: "Xiaoyi, Xiaoyi.";
Electronic device: "I'm here.";
User A: "Do you have a favorite animal?";
Electronic device: "I like furry animals. They look warm.";
User A: "Then you must like this panda toy.";
Electronic device: "Well, I like this better than I like you.";
User A: "xxxxx....".

The foregoing example is a voice interaction actively initiated by the user. To be specific, after the user A actively speaks a wake-up word "Xiaoyi, Xiaoyi" of the electronic device 100, the electronic device 100 is woken up, and starts the interaction with the user A. In another example, the voice interaction may also be an interaction actively initiated by the electronic device 100. For example, when observing that the user A gazes on the electronic device 100 for a long time (for example, consecutive 10s), the electronic device 100 may play a preset voice (for example, "do you have any question to ask me?"), to actively initiate the voice interaction with the user A.

Still refer to FIG. 1. A user B still exists around the electronic device 100. The user B is a user who has just ended a voice interaction with the electronic device 100 (for example, half a minute ago). A reason why the user B ends the voice interaction with the electronic device 100 is not limited in the present disclosure. For example, the user B does not reply to the voice played by the electronic device 100, to actively end the voice interaction with the electronic device 100; or the electronic device 100 detects a wake-up word (for example, Xiaoyi, Xiaoyi) from the user A in a process of performing voice interaction with the user B, to end the voice interaction with the user B, and start the voice interaction with the user A.

Because the user B is the user who has just performed voice interaction with the electronic device 100, the user B may still continue to perform voice interaction with the electronic device 100. That is, the user B is a potential interactor of the electronic device 100. However, in some embodiments, when performing voice interaction with the user A, the electronic device 100 suppresses a sound in a direction other than the direction in which the user A is located, to improve voice collection accuracy. For example, the electronic device collects only a sound within ±30° in the front, and suppresses a sound in another direction. In this way, when the user B is speaking, the electronic device 100 cannot collect a voice of the user B, and therefore cannot sense an interaction requirement of the user B.

Therefore, an implementation of the present disclosure provides a voice interaction method, to determine a target interactor in a multi-person interaction scenario, and improve user experience in the multi-person interaction scenario. Specifically, in a process of voice interaction with the user A, the electronic device 100 not only collects an audio signal in a direction in which the user A (as a "current interactor" or a "first user") is located, but also collects an audio signal in a direction in which the user B (as a "potential interactor" or a "second user") is located. The electronic device 100 determines, based on the collected audio signals, whether a time at which the user A starts to speak is within a specified preferred waiting time period (also referred to as a "first time period"), and determines the target interactor (an interactor that the electronic device 100 is about to respond to) from the user A and the user B based on a determining result. For example, when the time at which the user A starts to speak is within the specified preferred waiting time period, the user A is determined as the target interactor; or otherwise, the user B may be determined as the target interactor.

In the present disclosure, the target interactor may be determined from the user A and the user B based on the preferred waiting time period, and voice interaction requirements of the current interactor (for example, the user A) and the potential interactor (for example, the user B) may be properly considered, so that the target interactor is accurately determined, thereby improving user experience in the multi-person interaction scenario.

The following describes specific embodiments of the present disclosure. In the following embodiments, the intelligent robot is used as an example of the electronic device 100. However, it may be understood that the present disclosure is not limited thereto.

FIG. 2 is a diagram of an example structure of an electronic device 100 according to this embodiment. Refer to FIG. 2. The electronic device 100 includes a processor 110, a camera 120, a microphone 130, a speaker 140, a communication module 150, a memory 160, and a sensor 170.

It may be understood that the structure shown in this embodiment of the present invention does not constitute a specific limitation on the electronic device 100. In some other embodiments of the present disclosure, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors. The processor may generate an operation control signal based on an instruction operation code and a time sequence signal, to control instruction fetching and instruction executing.

The camera 120 is configured to capture a static image or a video. An optical image of an object is generated through a lens, and is projected onto a photosensitive element. The photosensitive element may be a charge coupled device (charge coupled device, CCD), or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 120. N is a positive integer greater than 1.

The microphone 130, also referred to as a "mike" or a "microphone", is configured to convert a sound signal into an electrical signal. The electronic device 100 may be provided with a plurality of (for example, three, four, or more) microphones 130, to form a microphone array. As a voice front-end device, the microphone array not only collects sound signals, but also implements functions such as collecting sound signals, reducing noise, recognizing a sound source, and implementing a directional recording function.

The speaker 140, also referred to as a "horn", is configured to convert an audio electrical signal into a sound signal. The electronic device 100 may listen to music or answer a hands-free call through the speaker 140.

The communication module 150 may provide a solution that includes wireless communication such as a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, and an infrared (infrared, IR) technology and that is applied to the electronic device 100. The electronic device may communicate with another device (for example, a cloud server) through the communication module 150.

The memory 160 may be configured to store computer-executable program code. The executable program code includes instructions. The memory 160 may include a program storage region and a data storage region. The program storage region may store an operating system, an application required by at least one function (for example, a voice playing function or an image playing function), and the like. The data storage region may store data (such as audio data and an address book) and the like that are created during use of the electronic device 100. In addition, the memory 160 may include a high-speed random access memory, or may include a non-volatile memory, for example, at least one magnetic disk storage, a flash memory, or a universal flash storage (universal flash storage, UFS). The processor 110 executes various function applications and data processing of the electronic device 100 by running the instructions stored in the memory 160 and/or the instructions stored in the memory disposed in the processor. The instructions stored in the memory 160 may include: when various function applications and data processing of the electronic device 100 are executed by at least one of the processors 110, the electronic device 100 is enabled to implement the voice interaction method provided in this embodiment of the present disclosure.

The sensor 170 may include a distance sensor and an optical proximity sensor. The distance sensor is configured to measure a distance. For example, the distance sensor may measure a distance by using infrared or laser. The optical proximity sensor may include a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, whether there is a user around.

In addition, the electronic device may further include a rotation mechanism, to implement a steering engine turning function of the electronic device. For example, through the rotation mechanism, the electronic device may rotate from an angle facing the user A to an angle facing the user B.

In addition, the electronic device may include several functional units, for example, an ASR algorithm unit, a voice recognition unit such as a sound source positioning algorithm unit (for example, a beamforming algorithm unit), a sound source suppression algorithm unit, and a visual recognition unit such as a facial recognition algorithm unit.

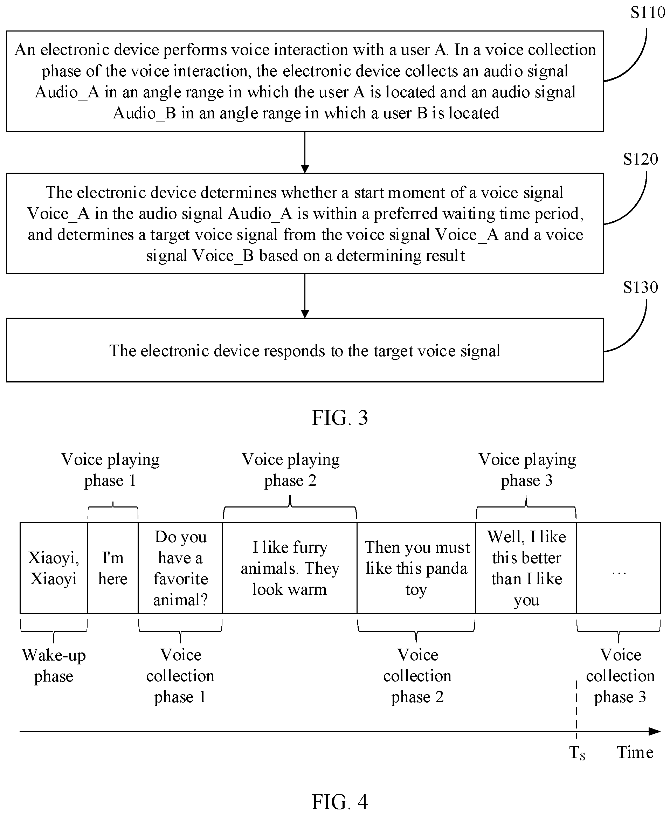

The following describes a specific procedure of the voice interaction method provided in this embodiment with reference to the scenario shown in FIG. 1. Refer to FIG. 3. The voice interaction method provided in this embodiment includes the following steps.

S110: An electronic device performs voice interaction with a user A (also referred to as a "current interactor" or a "first user"). In a voice collection phase of the voice interaction, the electronic device collects an audio signal Audio_A in an angle range in which the user A is located and an audio signal Audio_B in an angle range in which a user B (also referred to as a "potential interactor" or a "second user") is located.

FIG. 4 is a diagram of a time sequence of a voice interaction between an electronic device and a user A. Content in the white box is content spoken by the user A, and content in the gray box is content played by the electronic device. Refer to FIG. 4. A process of the voice interaction between the electronic device and the user A includes a voice playing phase and a voice collection phase that are alternately performed. In the voice playing phase, the electronic device plays a device voice. After the device voice is played, the electronic device enters the voice collection phase, to monitor a user voice. After determining that the user finishes speaking, the electronic device ends the voice collection phase, to enter a next voice playing phase. In another embodiment, when the electronic device does not monitor, within a specified time (for example, 8s), that the user speaks, the electronic device may end the voice collection phase. Usually, in the voice playing phase, the electronic device may turn off a microphone, and does not collect an external sound.

In this embodiment, in each voice collection phase, the electronic device determines whether there is a potential interactor. If there is a potential interactor, an audio signal in a direction range in which the current interactor is located and an audio signal in a direction range in which the potential interactor is located are collected; or if there is no potential interactor, only an audio signal in a direction range in which the current interactor is located is collected.

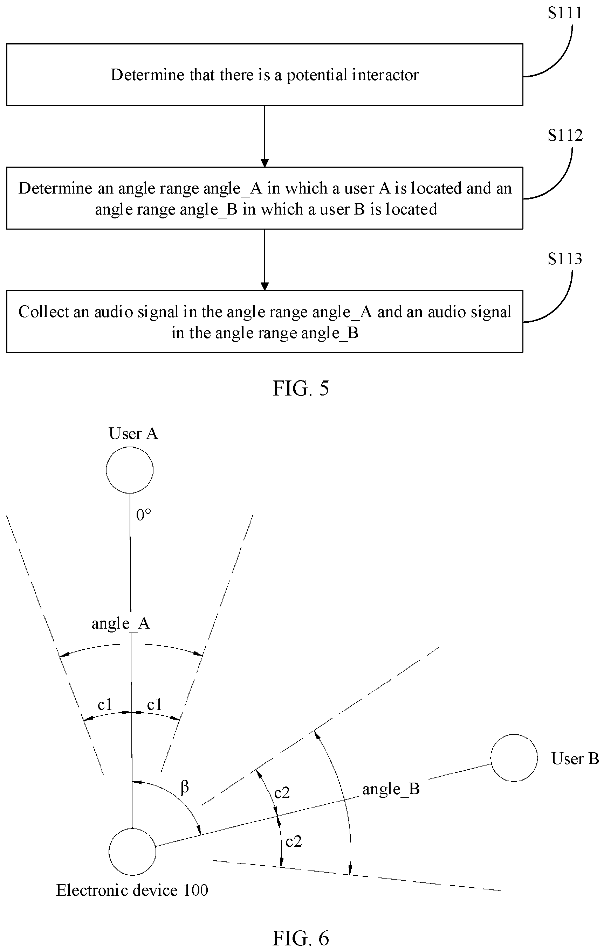

The following uses a current voice collection phase (namely, a voice collection phase 3 in FIG. 4) as an example, to describe a process in which the electronic device collects the user voice. A start moment of the current voice collection phase is T_{S}. Refer to FIG. 5. The process in which the electronic device collects the user voice includes the following steps.

S111: The electronic device determines that there is a potential interactor.

The potential interactor is a user who has performed voice interaction with the electronic device within a specified historical time period P1. Because the potential interactor has performed voice interaction with the electronic device, the potential interactor may still perform voice interaction with the electronic device. In this embodiment, the specified historical time period P1 is a time period of second duration T₂ before the moment T_{S}. To be specific, a start moment of the specified historical time period P1 is T_{S}-T₂, and an end moment is T_{S}. In other words, the potential interactor is a user who has recently interacted with the electronic device within a time period of the second duration. In this case, there is a high probability that the potential interactor performs voice interaction with the electronic device. A specific value of the second duration is not limited in this embodiment. In some examples, the second duration is 0.5 min to 2 min, for example, 0.5 min, 1 min, or 1.3 min. It should be noted that a value range in the present disclosure includes an end value. For example, the value range 0.5 min to 2 min includes 0.5 min and 2 min.

The following uses the user B as an example to describe a method for determining, by the electronic device, whether there is a potential interactor. In a process of performing voice interaction with the user A, the electronic device determines that the user B exists around the electronic device. For example, the electronic device may determine, by using an image recognition method, that the user B exists around the electronic device, or determine, through a sensor (for example, an optical proximity sensor), that the user B exists around the electronic device. In some examples, the electronic device determines a user within a specified distance (for example, within 3 m) as a user located around the electronic device.

Further, the electronic device identifies an identity of the user B. For example, the electronic device identifies the identity of the user B in a facial recognition manner, a voiceprint recognition manner, or the like. Then, the electronic device may determine, by querying a voice interaction record stored in the electronic device, whether the user B is a potential interactor. For example, the voice interaction record stores an identifier of a user who has performed voice interaction with the electronic device within a recent period of time (for example, within two days), and a start time, an end time, and the like of each voice interaction.

In this embodiment, the specified historical time period P1 is [T_{S}-60s, T_{S}]. According to a historical interaction record, a time period of a recent interaction of the user B with the electronic device is [T_{S}-80s, T_{S}-40s]. Therefore, the user B has performed voice interaction with the electronic device within the specified historical time period P1. In this way, the electronic device determines that the user B is a potential interactor.

S112: The electronic device determines an angle range (denoted as angle_A) in which the user A is located and an angle range (denoted as angle_B) in which the user B is located.

FIG. 6 is a diagram of an angle range angle_A and an angle range angle_B. For example, the front of the electronic device is 0°, and a direction of clockwise rotation around the electronic device is a positive direction. The electronic device may position the user A and the user B in a visual positioning manner, a distance measuring manner by a distance sensor, a sound source positioning manner, or the like. After positioning the user A and the user B, the electronic device may determine that an angle of the user A is α (where the user A is located in front of the electronic device, and therefore α = 0°), and an angle of the user B is β (for example, 75°). In another embodiment, the user A may not face the electronic device. In this embodiment, α may be another value, for example, α = -12°.

Considering factors such as a positioning error and sound diffusion, to collect voice signals of the user A and the user B more reliably, the electronic device not only collects audio signals in locations in which the user A and the user B are located, but also collects audio signals around the user A and the user B. That is, the electronic device collects audio signals in the angle range angle_A in which the user A is located and in the angle range angle_B in which the user B is located. In this embodiment, angle_A = α ± c1, and angle_B = β ± c2. Values of c1 and c2 are not limited in this embodiment. For example, c1 = c2 = 20° to 40°. For example, c1 = c2 = 30°.

S113: The electronic device collects the audio signal (denoted as Audio_A and used as a first audio signal) in the angle range angle_A and the audio signal (denoted as Audio_B and used as a second audio signal) in the angle range angle_B.

Specifically, at the moment T_{S}, the electronic device turns on the microphone, and collects an audio signal by using a microphone array. Then, the electronic device processes, by using a beamforming algorithm A, the audio signal collected by the microphone array, to obtain the audio signal Audio_A; and processes, by using a beamforming algorithm B, the audio signal collected by the microphone array, to obtain the audio signal Audio_B.

A target angle of the beamforming algorithm A is set to angle_A. Therefore, the audio signal Audio_A is an audio signal obtained after a sound signal outside angle_A is suppressed, that is, angle_A is an audio signal within the angle range angle_A.

A target angle of the beamforming algorithm B is set to angle_B. Therefore, the audio signal Audio_B is an audio signal obtained after a sound signal outside the angle_B is suppressed, that is, angle_B is an audio signal within the angle range angle_B.

The foregoing describes an example method for collecting the user voice by the electronic device. The following returns to FIG. 3, and continues to describe subsequent steps of the voice interaction method provided in this embodiment.

S120: The electronic device determines whether a start moment of a voice signal (denoted as Voice_A and used as a first voice signal) in the audio signal Audio_A is within a preferred waiting time period (also referred to as a "first time period"), and determines a target voice signal (a voice signal that the electronic device is about to reply) from the voice signal Voice_A and a voice signal Voice_B (used as a second voice signal) based on a determining result, where the voice signal Voice_B is a voice signal included in the audio signal Audio_B.

If the user A speaks in a current voice collection time period, the audio signal Audio_A includes the voice signal Voice_A. Similarly, if the user B speaks in the current voice collection time period, the audio signal B includes the voice signal Voice_B. The electronic device may detect the voice signals Voice_A and Voice_B in the audio signals Audio_A and Audio_B by using a voice activity detection VAD algorithm, and determine endpoints (a start point and an end point) of the voice signals Voice_A and Voice_B.

In this embodiment, the electronic device determines whether the start point (also referred to as a start moment of Voice_A) of the voice signal Voice_A is within the preferred waiting time period, and determines one of the voice signal Voice_A and the voice signal Voice_B as the target voice signal based on the determining result. The preferred waiting time period is a time period of first duration T after the moment T_{S}. That is, a start point of the preferred waiting time period is the moment T_{S}, and an end point is a moment T_{E} (where T_{E} = Ts + T).

In some embodiments, the first duration T is a time (for example, 3s) in which the user A is most likely to speak. To be specific, if the user A continues to interact with the electronic device, the user A is most likely to speak within the preferred waiting time period. In this embodiment, the target voice signal is determined based on the preferred waiting time period. This can better meet an interaction intention of the user, to improve user experience. For coherence of description, a specific method for determining the first duration T is described below.

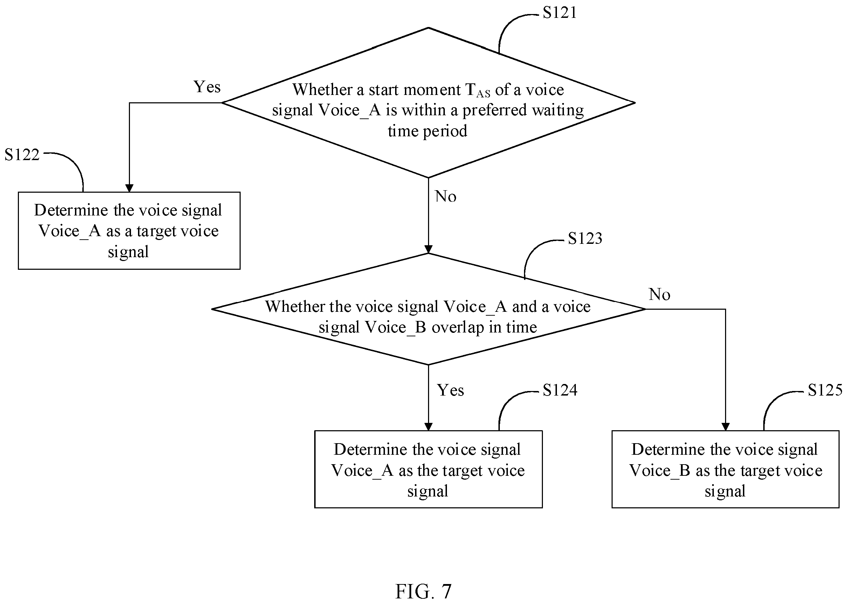

Refer to FIG. 7. A process in which the electronic device determines the target voice signal provided in this embodiment includes the following steps.

S121: The electronic device determines whether a start moment T_{AS} of the voice signal Voice_A is within the preferred waiting time period.

The electronic device may detect the start moment T_{AS} of the voice signal Voice_A by using the VAD algorithm. It may be understood that the start moment T_{AS} of Voice_A is a moment at which the user A starts to speak.

After determining the moment T_{AS}, the electronic device compares the moment T_{AS} with the end moment T_{E} of the preferred waiting time period. If the moment T_{AS} is earlier than or equal to the moment T_{E}, the electronic device determines that the start moment T_{AS} of the voice signal Voice_A is within the preferred waiting time period, and performs step S122; or otherwise, the electronic device performs step S123.

S122: The electronic device determines the voice signal Voice_A as the target voice signal.

In this embodiment, Voice_A is determined as the target voice signal (the voice signal that the electronic device is about to respond to), provided that the start moment T_{AS} of the voice signal Voice_A is within the preferred waiting time period. In other words, the electronic device determines the user A as the target interactor (that is, keeps the user A as the current interactor unchanged), provided that the user A speaks within the preferred waiting time period, so that a voice interaction requirement of the user A is preferentially met.

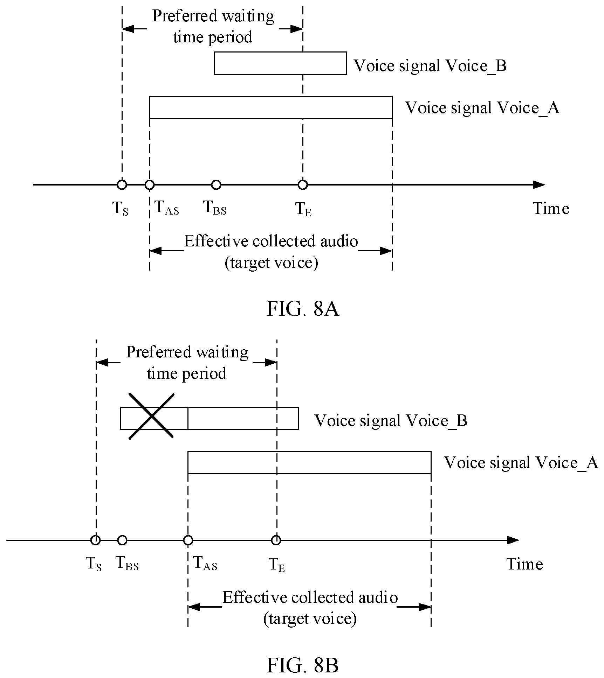

FIG. 8A shows an example of determining a voice signal Voice_A as a target voice signal. Refer to FIG. 8A. Both the start moment T_{AS} of Voice_A and a start moment T_{BS} of Voice_B are within the preferred waiting time period, and the moment T_{AS} is earlier than the moment T_{BS} (that is, a time at which the user A speaks is earlier than a time at which the user B speaks). In this example, because the moment T_{AS} is within the preferred waiting time period, the electronic device determines the voice signal Voice_A as the target voice signal.

Optionally, after detecting the start point of the voice signal Voice_A (that is, after the moment T_{AS}), the electronic device may stop collecting the audio signal Audio_B (or the voice signal Voice_B).

FIG. 8B shows another example of determining a voice signal Voice_A as a target voice signal. Refer to FIG. 8B. Both the start moment T_{AS} of Voice_A and a start moment T_{BS} of Voice_B are within the preferred waiting time period, but the moment T_{BS} is earlier than the moment T_{AS} (that is, a time at which the user B speaks is earlier than a time at which the user A speaks). In this example, although the user B first speaks, because the moment T_{AS} is within the preferred waiting time period, the electronic device still determines the voice signal Voice_A as the target voice signal. Optionally, after detecting the start point of the voice signal Voice_A (that is, after the moment T_{AS}), the electronic device may stop collecting the audio signal Audio_B (or the voice signal Voice_B), and discard the voice signal Voice_B collected before the moment T_{AS}.

If the user A does not speak within the preferred waiting time period, it is considered that the user A has a low interaction intention, and therefore, the user B may be determined as the target interactor, to consider a voice interaction requirement of the user B. The following provides descriptions with reference to subsequent steps in FIG. 7.

S123: The electronic device determines whether the voice signal Voice_A and the voice signal Voice_B overlap in time.

In this embodiment, at least one of the start moment T_{AS} of the voice signal Voice_A and the start moment T_{BS} of the voice signal Voice_B is within the preferred waiting time period. When the start moment T_{AS} of the voice signal Voice_A is outside the preferred waiting time period, the electronic device determines the target voice signal based on a status of overlap between the voice signal Voice_A and the voice signal Voice_B in time.

If the start moment T_{AS} of the voice signal Voice_A is earlier than or equal to an end moment T_{BE} of the voice signal Voice_B (also referred to as "an end point T_{BE} of Voice_B"), the electronic device determines that the voice signal Voice_A and the voice signal Voice_B overlap in time, and performs step S124; or otherwise, the electronic device determines that the voice signal Voice_A and the voice signal Voice_B do not overlap in time, and performs step S125. As described above, the endpoints of the voice signals, such as the start moment T_{AS} of the voice signal Voice_A and the end moment T_{BE} of the voice signal Voice_B, may be determined by using the voice activity detection VAD algorithm.

S124: The electronic device determines the voice signal Voice_A as the target voice signal.

When the voice signal Voice_A and the voice signal Voice_B overlap in time, the electronic device determines the voice signal Voice_A as the target voice signal. In other words, when the user A starts speaking before the user B finishes speaking, the user A is still used as the target interactor (the user A is kept as the current interactor unchanged).

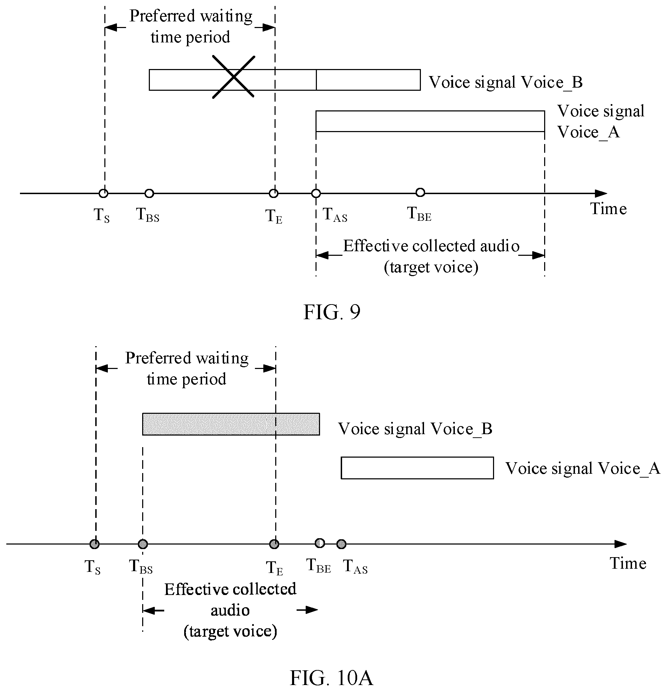

FIG. 9 shows another example of determining a voice signal Voice_A as a target voice signal. Refer to FIG. 9. The start moment T_{BS} of Voice_B is within the preferred waiting time period, and the end moment T_{BE} is outside the preferred waiting time period. The start moment T_{AS} of Voice_A is outside the preferred waiting time period, but the moment T_{AS} is earlier than the end moment T_{BE} of Voice_B (that is, the time when the user A starts to speak is earlier than a time when the user B ends to speak). In this example, when the voice signal Voice_A and the voice signal Voice_B overlap in time, the electronic device determines the voice signal Voice_A as the target voice signal.

Optionally, in some embodiments, after detecting the start point of the voice signal Voice_A (that is, after the moment T_{AS}), the electronic device may stop collecting the audio signal Audio_B (or the voice signal Voice_B), and discard the voice signal Voice_B collected before the moment T_{AS}. In this embodiment, after the start point of the voice signal Voice_A is detected, if it is determined that the voice signal Voice_B does not end (that is, the end point T_{BE} of the voice signal Voice_B is not detected), it may be determined that the start moment T_{AS} of Voice_A is earlier than the end moment T_{BE} of Voice_B.

S125: The electronic device determines the voice signal Voice_B as the target voice signal.

When the voice signal Voice_A and the voice signal Voice_B do not overlap in time, the electronic device determines the voice signal Voice_B as the target voice signal. In other words, when the user B has finished speaking and the user A has not started speaking, the electronic device determines the user B as the target interactor (that is, the electronic device switches the current interactor from the user A to the user B).

FIG. 10A shows an example of determining a voice signal Voice_B as a target voice signal. Refer to FIG. 10A. The start moment T_{BS} of Voice_B is within the preferred waiting time period, and the end moment T_{BE} is outside the preferred waiting time. The start moment T_{AS} of Voice_A is later than the end moment (T_{BE}) of Voice_B (that is, the user A does not start to speak when the user B finishes speaking). In this example, when the voice signal Voice_A and the voice signal Voice_B do not overlap in time, the electronic device determines the voice signal Voice_B as the target voice signal. Optionally, after detecting the end point of the voice signal Voice_B (that is, after the moment T_{BE}), the electronic device may stop collecting the audio signal (for example, turn off the microphone, and do not collect the audio signal Audio_A), and respond to the voice signal Voice_B (that is, perform step S130).

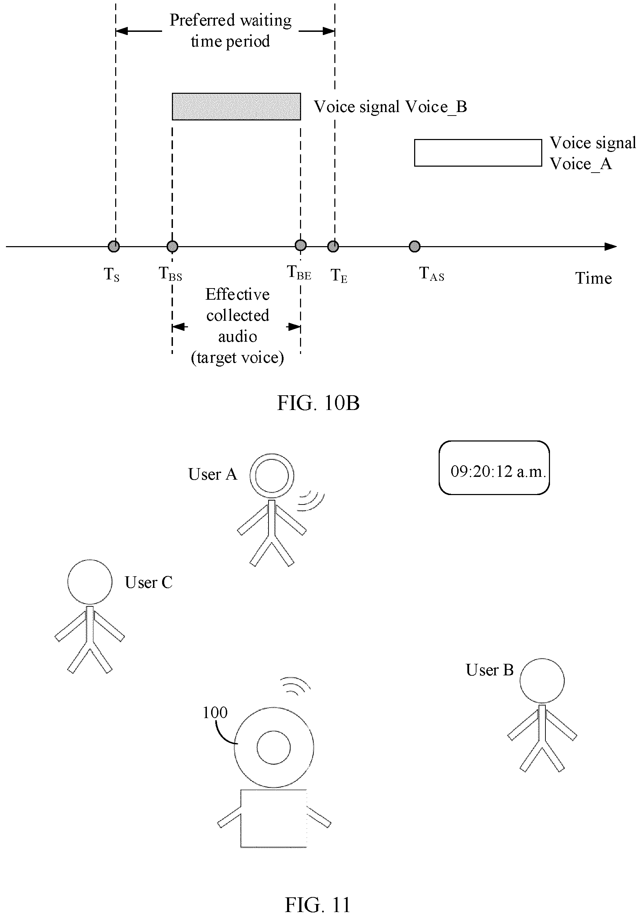

FIG. 10B shows an example of determining a voice signal Voice_B as a target voice signal. Refer to FIG. 10B. Both the start moment T_{BS} and the end moment T_{BE} of Voice_B are within the preferred waiting time period. The start moment T_{AS} of Voice_A is outside the preferred waiting time. In this example, after detecting the end point T_{BE} of Voice_B, the electronic device continues to wait until the moment T_{E}. When determining that the user A still does not speak after the moment T_{E} arrives, the electronic device determines the voice signal Voice_B as the target voice signal. Optionally, after waiting until the moment T_{E}, the electronic device may stop collecting the audio signal (for example, turn off the microphone, and do not collect the audio signal Audio_A), and respond to the voice signal Voice_B (that is, perform step S130).

S130: The electronic device responds to the target voice signal.

After determining the target voice signal, the electronic device responds to the target voice signal (that is, replies to the target interactor). For example, the electronic device uploads the target voice signal to a cloud server. The cloud server performs semantic recognition on the target voice signal by using an automatic speech recognition (Automatic Speech Recognition, ASR) algorithm and a natural voice processing (Neuro-Linguistic Programming, NLP) algorithm, to determine reply text content. The ASR algorithm is a technology used to convert a voice into a text, and the NLP algorithm is a technology used to enable the electronic device to "read" a human language.

After determining a reply text, the cloud server sends the reply text to the electronic device. After receiving the reply text, the electronic device converts the reply text into a voice stream by using an algorithm (Text To Speech, TTS), and outputs (for example, plays) the voice stream, to respond to the target voice signal (or the target interactor). In a process of playing the voice stream, the electronic device may turn off the microphone, and does not collect the audio signal. In another embodiment, the electronic device may alternatively determine the reply text content by using a local ASR algorithm and a local NLP algorithm.

In addition, in addition to a voice response, a response manner of the electronic device may further include an expression, an action, and the like. For example, after determining that the target interactor is the user B, the electronic device turns to a direction facing the user B, to improve intelligence and humanization of the electronic device.

In conclusion, this embodiment provides a voice interaction method. A target interactor is determined based on a preferred waiting time period, so that voice interaction requirements of a current interactor (for example, a user A) and a potential interactor (for example, a user B) can be properly considered, thereby improving user experience in a multi-person interaction scenario.

For example, if the user A (namely, the current interactor) speaks within the preferred waiting time period, the electronic device determines the user A as the target interactor, to preferentially meet the voice interaction requirement of the user A. If the user A does not speak within the preferred waiting time period, it is considered that the user A has a low interaction intention, and therefore the user B (namely, the potential interactor) may be determined as the target interactor, to consider the voice interaction requirement of the user B.

This embodiment is an example for description of the technical solutions of the present disclosure. A person skilled in the art may make other variations.

For example, in this embodiment, if the user A does not speak within the preferred waiting time period, the target interactor is determined based on a status of overlap between a voice signal Voice_A and a voice signal Voice_B in time. In another embodiment, as long as the user A does not speak within the preferred waiting time period, and the user B speaks within the preferred waiting time period, the user B is determined as the target interactor. In this embodiment, the target interactor may be determined relatively more quickly. In addition, this embodiment may also increase a priority of the potential interactor.

For another example, in this embodiment, at least one of a start moment T_{AS} of the voice signal Voice_A and a start moment T_{BS} of the voice signal Voice_B is within the preferred waiting time period. In another embodiment, when both the start moment T_{AS} of the voice signal Voice_A and the start moment T_{BS} of the voice signal Voice_B are outside the preferred waiting time period, an electronic device may continue to monitor the voice signal Voice_A. If the start point of the voice signal Voice_A is monitored before a specified time (for example, T_{S}+8s), the voice signal Voice_A is used as the target voice signal; or otherwise, the electronic device ends a current voice interaction.

For another example, in some embodiments, considering that a wake-up word may directly cause switching of the target interactor, the voice (namely, the voice signal Voice_B) of the user B does not include a wake-up word of the electronic device.

For another example, in this embodiment, there is one potential interactor around the electronic device, which is specifically the user B. In other scenarios, there may be a plurality of potential interactors around the electronic device. Refer to FIG. 11. There are two potential interactors around the electronic device, which are specifically the user B and a user C. In this embodiment, the electronic device may select one of the user B and the user C as a temporary interactor, and determine the target interactor from the temporary interactor and the user A based on the method described in step S120.

A manner of selecting the temporary interactor is not limited in the present disclosure. For example, one of the user B and the user C that recently performs voice interaction with the electronic device is selected as the temporary interactor; or one of the user B and the user C that first speaks in a current voice collection phase is selected as the temporary interactor.

The following describes a method for determining the first duration T provided in this embodiment.

In this embodiment, the first duration T is determined based on a time at which the user A is most likely to speak. That is, when it is assumed that the user A intends to continue an interaction, the user A will speak within the first duration (that is, before a moment T_{E}) at the latest.

In this embodiment, the first duration is determined based on an interaction intention value P of the user A and a quantity M of rounds of interactions between the user A and the electronic device within a specified time period. The interaction intention value P represents an intention of interaction between the user A and the electronic device. A larger interaction intention value P indicates a higher probability that the user A performs voice interaction with the electronic device.

Specifically, first duration T = k₁ × P + k₂ × min{M, n}, where k₁ and k₂ are preset constants, and n is an integer from 3 to 6. The following provides specific descriptions.

(1) Interaction intention value P. In this embodiment, the interaction intention value is a value between 0 and 1. However, the present disclosure is not limited thereto. In another embodiment, the interaction intention value P may also be other values, for example, a value between 1 and 5.

In this embodiment, the interaction intention value P is determined based on a face angle φ of the user A and/or a distance D between the user A and the electronic device. The face angle φ of the user A indicates a degree to which the face of the user A is directly facing the electronic device. When the face of the user faces the front of the electronic device, the face angle of the user A is 0°. A larger angle of the user A towards the electronic device indicates a larger face angle φ of the user A. Usually, the more the user A faces the electronic device, the larger an interaction intention value P of the user A is. The face angle φ of the user A may be determined in an image recognition manner.

The distance D between the user A and the electronic device may be determined in a manner of image recognition, distance measurement by a distance sensor, sound source positioning, or the like. For example, when the distance D between the user A and the electronic device is within a specified range (for example, 0.5 to 1 times a height of the electronic device), it is considered that the user A has a high interaction intention value P; and the larger a deviation between the distance D and the specified range, the smaller the interaction intention value P of the user A is.

In some embodiments, the interaction intention value P is a weighted sum of the face angle φ and the distance D. In this embodiment, weight values of the face angle φ and the distance D may be constants determined based on experience.

In some other embodiments, the interaction intention value P may be determined by using an AI algorithm. The electronic device may store a pre-trained AI model. The AI model indicates a mapping relationship between the face angle φ, the distance D, and the interaction intention value P. After obtaining the face angle φ and the distance D through measurement, the electronic device may obtain the interaction intention value P through calculation by using the AI model.

(2) Quantity M of rounds of interactions. The quantity M of rounds of interactions is a quantity of rounds of interactions between the user A and the electronic device within a specified time period P2. In the present disclosure, one question and answer completed by the electronic device and the user is counted as one interaction round. For example, the user A asks "Do you have a favorite animal?", and the electronic device replies "I like furry animals. They look warm.". This is counted as one interaction round.

The quantity M of rounds of interactions may reflect a frequency of interaction between the user A and the electronic device. A higher interaction frequency (namely, a larger value of M) indicates a higher probability of interaction between the user A and the electronic device. In this embodiment, the specified time period P2 is a time period of third duration before the moment T_{S}. In other words, M is a recent round of interaction between the user A and the electronic device within the third duration. In this way, M may more accurately represent a possibility that the user A continues to interact with the electronic device. For example, the third duration is 0.5 min to 2 min, for example, 1 min.

In some embodiments, M is a round of a continuous interaction between the user A and the electronic device within the specified time period P2, and the continuous interaction means that no other user is involved in an interaction process between the user A and the electronic device. If other users are involved, the quantity M of rounds of interactions is recalculated from 0.

(3) k₁, k₂. k₁ and k₂ are weights of the interaction intention value P and the quantity M of rounds of interactions respectively, and are used to adjust weights of the interaction intention value P and the quantity M of rounds of interactions within the first duration T. In this embodiment, when the interaction intention value P is a value between 0 and 1, and M is a value greater than 1, to balance the weights of the interaction intention value P and the quantity M of rounds of interactions within the first duration T, k₁ is greater than k₂. For example, k₁ is three to five times of k₂. For example, k₁ = 2, and k₂ = 0.5.

(4) n. n is used to limit an upper limit of the first duration T. In some scenarios, the user A interacts with the electronic device for a large quantity of rounds, for example, M = 15. In this case, the first duration T may have an excessively large value. To avoid an unlimited increase of the first duration T, the quantity of rounds of interactions is set to min {M, n}, to limit the upper limit of the first duration T.

The foregoing describes the method for determining the first duration T. For example, in an example, when interaction intention value P = 0.9, quantity M of rounds of interactions = 3, k₁ = 2, k₂ = 0.5, and n = 5, it may be learned that T = 3.3s. In other examples, when interaction intention value P = 0.3, quantity M of rounds of interactions = 1, k₁ = 2, k₂ = 0.5, and n = 5, it may be learned that T = 1.1s.

In this embodiment, the first duration is determined based on the interaction intention value P and the quantity M of rounds of interactions, so that the interaction possibility of the user A can be accurately predicted. A higher probability of interaction of the user A indicates longer preferred waiting duration of the electronic device for the user A, so that the voice interaction requirement of the user A can be properly met.

The foregoing describes the method for determining the first duration T. However, the present disclosure is not limited thereto.

For example, in some other embodiments, the first duration T may be determined based on one of the interaction intention value P and the M of rounds of interactions. For example, T = 3 × P.

For another example, in this embodiment, the first duration T is dynamically adjusted based on the interaction intention value P and the quantity M of rounds of interactions. In some other embodiments, the first duration T may be a fixed value determined based on experience. For example, the first duration is 3s. In this embodiment, a process of determining the first duration T can be simplified, and calculation overheads can be reduced.

Compared with the voice interaction method provided in another embodiment, the voice interaction method provided in this embodiment of the present disclosure can properly select a target interactor in a multi-person interaction scenario. The following separately compares the voice interaction method with the voice interaction method provided in another embodiment.

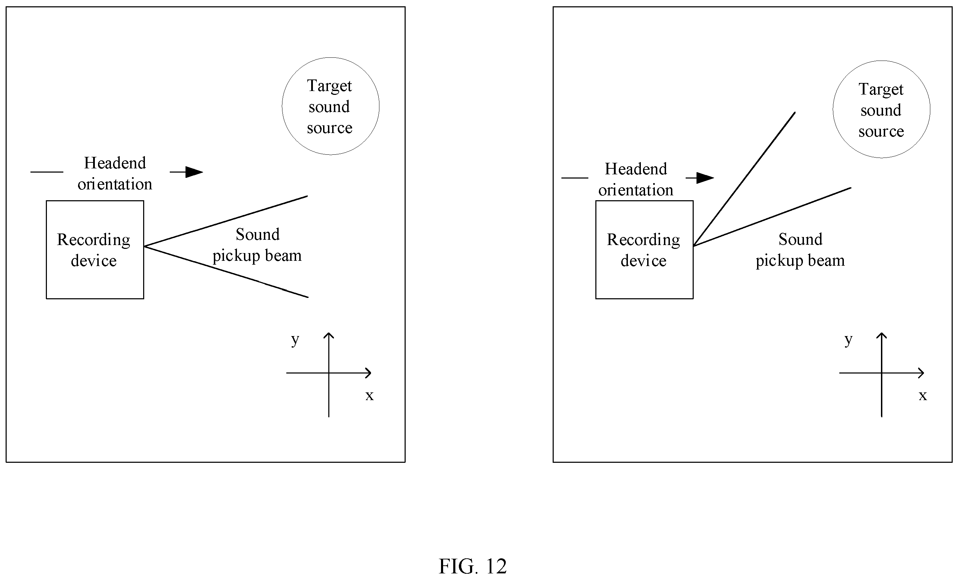

FIG. 12 shows an implementation. Specifically, FIG. 12 provides a sound pickup method and apparatus. An initial sound pickup beam points to a target sound source. When it is detected that an orientation of a recording device faces changes, a direction of the sound pickup beam is dynamically adjusted, to ensure that the target sound source and the sound pickup beam point to a same direction. This attenuates or shields a sound signal of another noise source.

In an implementation shown in FIG. 12, after the target sound source is determined, an orientation of the sound pickup beam is dynamically adjusted based on a direction to which the recording device faces. However, a problem of how a robot determines a pick up a sound direction and how to select a target interactor from a plurality of users in a multi-person interaction scenario is not resolved.

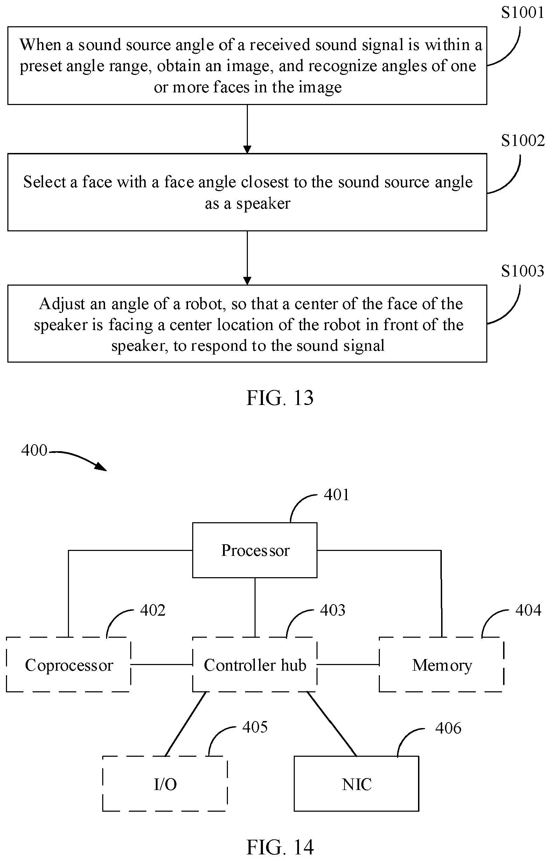

FIG. 13 shows another implementation. Specifically, FIG. 13 provides a sound pickup method. The method includes the following steps: Step S1001: When a sound source angle of a received sound signal is within a preset angle, obtain faces in a current camera. Step S1002: Select a face closest to the sound source angle from these faces as a speaker, that is, track the face closest to the angle, to track the current speaker. Step S1003: Adjust an angle of the robot, so that a center of the face of the speaker is facing a center location of the robot in front of the speaker, to respond to a sound signal of the speaker.

In the implementation shown in FIG. 13, only an angle closest to a current sound source angle is selected from all faces in front of the robot to perform face tracking, to track a current speaker. However, a problem of how a robot determines a sound pickup direction and how to select a target interactor from a plurality of users in a multi-person interaction scenario is not resolved.

Compared with the manners shown in FIG. 12 and FIG. 13, in the voice interaction method in this embodiment, in the multi-person interaction scenario, voice interaction requirements of the current interactor and the potential interactor can be properly considered, and the target interactor can be accurately determined, thereby improving user experience in the multi-person interaction scenario.

FIG. 14 is a block diagram of an electronic device 400 according to an embodiment of the present disclosure. The electronic device 400 may include one or more processors 401 coupled to a controller hub 403. For at least one embodiment, the controller hub 403 communicates with the processor 401 by using a multi-branch bus such as a front side bus (Front Side Bus, FSB), a point-to-point interface such as a quick path interconnect (QuickPath Interconnect, QPI) interface, or a similar interface 406. The processor 401 executes instructions for controlling a general type of data processing operation. In an embodiment, the controller hub 403 includes, but is not limited to, a graphics memory controller hub (Graphics & Memory Controller Hub, GMCH) (not shown) and an input/output hub (Input Output Hub, IOH) (which may be on separate chips) (not shown), where the GMCH includes a memory and a graphics controller and is coupled to the IOH.

The electronic device 400 may further include a coprocessor 402 and a memory 404 that are coupled to the controller hub 403. Alternatively, one or both of the memory and the GMCH may be integrated into the processor (as described in the present disclosure). The memory 404 and the coprocessor 402 are directly coupled to the processor 401 and the controller hub 403. The controller hub 403 and the IOH are located in a single chip.

The memory 404 may be, for example, a dynamic random access memory (DRAM, Dynamic Random Access Memory), a phase change memory (PCM, Phase Change Memory), or a combination of both. The memory 404 may include one or more tangible and non-transitory computer-readable media that are configured to store data and/or instructions. The computer-readable storage medium stores instructions. Specifically, temporary and permanent copies of the instructions are stored. The instructions may include an instruction that causes the electronic device 400 to implement the methods shown in FIG. 3, FIG. 5, and FIG. 7 when being executed by at least one of the processors. When the instructions are run on a computer, the computer is enabled to perform the method disclosed in the foregoing embodiment.

In an embodiment, the coprocessor 402 is a dedicated processor, for example, a high-throughput many integrated core (Many Integrated Core, MIC) processor, a network or communication processor, a compression engine, a graphics processor, a general-purpose computing on graphics processing units (General-purpose computing on graphics processing units, GPGPU), or an embedded processor. An optional property of the coprocessor 402 is shown in FIG. 14 in dashed lines.

In an embodiment, the electronic device 400 may further include a network interface (Network Interface Controller, NIC) 406. The network interface 406 may include a transceiver, configured to provide a radio interface for the electronic device 400, to communicate with any another suitable device (such as a front-end module or an antenna). In various embodiments, the network interface 406 may be integrated with another component of the electronic device 400. The network interface 406 may implement a function of the communication unit in the foregoing embodiment.

The electronic device 400 may further include an input/output (Input/Output, I/O) device 405. The I/O 405 may include: a user interface, where this design enables a user to interact with the electronic device 400; a peripheral component interface, where this design enables a peripheral component to interact with the electronic device 400; and/or a sensor, where the sensor is designed to be configured to determine an environmental condition and/or location information related to the electronic device 400.

It should be noted that FIG. 14 is merely an example. To be specific, although FIG. 14 shows that the electronic device 400 includes a plurality of components such as the processor 401, the controller hub 403, and the memory 404, during actual application, a device using the methods in the present disclosure may include only some of the components of the electronic device 400, for example, may only include the processor 401 and the network interface 406. In FIG. 14, properties of the optional components are shown in dashed lines.

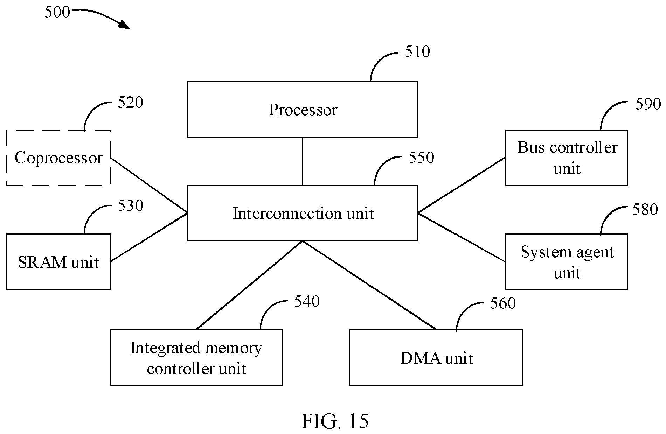

FIG. 15 is a block diagram of a system on chip (System on Chip, SoC) 500 according to an embodiment of the present disclosure. In FIG. 15, similar components have a same reference numeral. In addition, a dashed-line box is an optional feature of a more advanced SoC. In FIG. 15, the SoC 500 includes: an interconnection unit 550 coupled to a processor 510; a system agent unit 580; a bus controller unit 590; an integrated memory controller unit 540; one group of or one or more coprocessors 520 that may include integrated graphics logic, an image processor, an audio processor, and a video processor; a static random access memory (Static Random Access Memory, SRAM) unit 530; and a direct memory access (Direct Memory Access, DMA) unit 560. In an embodiment, the coprocessor 520 includes a dedicated processor, for example, a network or communication processor, a compression engine, a general-purpose computing on graphics processing units (General-purpose computing on graphics processing units, GPGPU), a high-throughput MIC processor, or an embedded processor.

The static random access memory (SRAM) unit 530 may include one or more tangible and non-transitory computer-readable media that are configured to store data and/or instructions. The computer-readable storage medium stores instructions. Specifically, temporary and permanent copies of the instructions are stored. The instructions may include an instruction that causes the SoC to implement the methods shown in FIG. 3, FIG. 5, and FIG. 7 when being executed by at least one of the processors. When the instructions are run on a computer, the computer is enabled to perform the method disclosed in the foregoing embodiment.

The term "and/or" in this specification describes only an association relationship between associated objects and indicates that three relationships may exist. For example, A and/or B may indicate the following three cases: Only A exists, both A and B exist, and only B exists.

All method implementations of the present disclosure may be implemented by software, a magnetic component, firmware, or the like.

Program code may be used to input instructions, to perform functions described in this specification and generate output information. The output information may be applied to one or more output devices in a known manner. For an objective of the present disclosure, a processing system includes any system having a processor such as a digital signal processor (Digital Signal Processor, DSP), a microcontroller, an application-specific integrated circuit (ASIC), or a microprocessor.

The program code may be implemented in a high-level procedural language or an object-oriented programming language, to communicate with the processing system. The program code may alternatively be implemented in an assembly language or a machine language when needed. Actually, the mechanism described in this specification is not limited to a scope of any particular programming language. In any case, the language may be a compiled language or an interpreted language.

One or more aspects of at least one embodiment may be implemented by using representative instructions stored on a computer-readable storage medium. The instructions represent various logic in a processor, and when the instructions are read by a machine, the machine acts on the logic for performing the technologies described in this specification. These representations referred to as "intellectual property (Intellectual Property, IP cores)" may be stored on a tangible computer-readable storage medium, and provided for a plurality of customers or production facilities for loading into a manufacturing machine that actually manufactures the logic or the processor.

In some cases, an instruction converter may be configured to convert the instructions from a source instruction set to a target instruction set. For example, the instruction converter may convert, in a transform (for example, a static binary transform, or a dynamic binary transform including dynamic compilation), morphing, emulation, or another manner, the instructions into one or more other instructions processed by a core. The instruction converter may be implemented by software, hardware, firmware, or a combination thereof. The instruction converter may be located on the processor, outside the processor, or partially on the processor and partially outside the processor.

## Claims

1. A voice interaction method, applied to an electronic device, wherein the method comprises:
performing voice interaction with a first user, and collecting, in a voice collection time period of the voice interaction, a first audio signal in an angle range in which the first user is located and a second audio signal in an angle range in which a second user is located, wherein the second user is a user who performs voice interaction with the electronic device in a specified historical time period;
determining whether a start moment of a first voice signal in the first audio signal is within a first time period, and determining a target voice signal from the first voice signal and a second voice signal based on a determining result, wherein the second voice signal is a voice signal comprised in the second audio signal, and the first time period is a time period of first duration after a start moment of the voice collection time period; and
responding to the target voice signal;
the method being further **characterized in that** at least one of the start moment of the first voice signal and a start moment of the second voice signal is within the first time period; and
the determining a target voice signal from the first voice signal and a second voice signal based on a determining result comprises:
if the start moment of the first voice signal is within the first time period, determining the first voice signal as the target voice signal; otherwise, determining the target voice signal based on a status of overlap between the second voice signal and the first voice signal in time.

2. The method according to claim 1, wherein the determining the target voice signal based on a status of overlap between the second voice signal and the first voice signal in time comprises:
if the second voice signal and the first voice signal overlap in time, determining the first voice signal as the target voice signal; or
if the second voice signal and the first voice signal do not overlap in time, determining the second voice signal as the target voice signal.

3. The method according to claim 1, wherein the first duration is determined based on an interaction intention value P of the first user and/or a quantity M of interactions between the first user and the electronic device within a specified time period, wherein the interaction intention value P represents an intention of the first user to perform voice interaction with the electronic device.

4. The method according to claim 3, wherein the interaction intention value P is determined based on a face angle of the first user and/or a distance between the first user and the electronic device.

5. The method according to claim 1, wherein the second voice signal does not comprise a wake-up word of the electronic device.

6. The method according to claim 1, wherein the specified historical time period is a time period of second duration before a start moment of the voice collection time period.

7. The method according to claim 6, wherein the second duration is 0.5 min to 2 min.

8. An electronic device, comprising:
a memory, configured to store instructions executed by one or more processors of the electronic device; and
a processor, wherein when the processor executes the instructions in the memory, the electronic device is enabled to perform the method according to any one of claims 1 to 7.

9. A computer-readable storage medium, wherein the computer-readable storage medium stores instructions; and when the instructions are executed on a computer, the computer is enabled to perform the method according to any one of claims 1 to 7.

## Patentansprüche

1. Sprachinteraktionsverfahren, angewandt auf eine elektronische Vorrichtung, wobei das Verfahren Folgendes umfasst:
Durchführen einer Sprachinteraktion mit einem ersten Benutzer und Erfassen, in einer Spracherfassungszeitspanne der Sprachinteraktion, eines ersten Audiosignals in einem Winkelbereich, in dem sich der erste Benutzer befindet, und eines zweiten Audiosignals in einem Winkelbereich, in dem sich ein zweiter Benutzer befindet, wobei es sich bei dem zweiten Benutzer um einen Benutzer handelt, der eine Sprachinteraktion mit der elektronischen Vorrichtung in einer definierten historischen Zeitspanne durchführt;
Bestimmen, ob ein Startzeitpunkt eines ersten Sprachsignals in dem ersten Audiosignal innerhalb einer ersten Zeitspanne liegt, und Bestimmen eines Zielsprachsignals aus dem ersten Sprachsignal und einem zweiten Sprachsignal basierend auf einem Bestimmungsergebnis, wobei es sich bei dem zweiten Sprachsignal um ein Sprachsignal handelt, das in dem zweiten Audiosignal umfasst ist, und es sich bei der ersten Zeitspanne um eine Zeitspanne einer ersten Dauer nach einem Startzeitpunkt der Spracherfassungszeitspanne handelt; und
Reagieren auf das Zielsprachsignal;
wobei das Verfahren ferner **dadurch gekennzeichnet ist, dass** mindestens einer von dem Startzeitpunkt des ersten Sprachsignals und einem Startzeitpunkt des zweiten Sprachsignals innerhalb der ersten Zeitspanne liegt; und
das Bestimmen eines Zielsprachsignals aus dem ersten Sprachsignal und einem zweiten Sprachsignal basierend auf einem Bestimmungsergebnis Folgendes umfasst:
wenn der Startzeitpunkt des ersten Sprachsignals innerhalb der ersten Zeitspanne liegt, Bestimmen des ersten Sprachsignals als das Zielsprachsignal; andernfalls Bestimmen des Zielsprachsignals basierend auf einem Status der zeitlichen Überlappung zwischen dem zweiten Sprachsignal und dem ersten Sprachsignal.

2. Verfahren nach Anspruch 1, wobei das Bestimmen des Zielsprachsignals basierend auf einem Status der zeitlichen Überlappung zwischen dem zweiten Sprachsignal und dem ersten Sprachsignal Folgendes umfasst:
wenn sich das zweite Sprachsignal und das erste Sprachsignal zeitlich überlappen, Bestimmen des ersten Sprachsignals als das Zielsprachsignal; oder
wenn sich das zweite Sprachsignal und das erste Sprachsignal nicht zeitlich überlappen, Bestimmen des zweiten Sprachsignals als das Zielsprachsignal.

3. Verfahren nach Anspruch 1, wobei die erste Dauer basierend auf einem Interaktionsabsichtswert P des ersten Benutzers und/oder einer Anzahl M von Interaktionen zwischen dem ersten Benutzer und der elektronischen Vorrichtung innerhalb einer definierten Zeitspanne bestimmt wird, wobei der Interaktionsabsichtswert P eine Absicht des ersten Benutzers darstellt, eine Sprachinteraktion mit der elektronischen Vorrichtung durchzuführen.

4. Verfahren nach Anspruch 3, wobei der Interaktionsabsichtswert P basierend auf einem Gesichtswinkel des ersten Benutzers und/oder einer Entfernung zwischen dem ersten Benutzer und der elektronischen Vorrichtung bestimmt wird.

5. Verfahren nach Anspruch 1, wobei das zweite Sprachsignal kein Weckwort der elektronischen Vorrichtung umfasst.

6. Verfahren nach Anspruch 1, wobei es sich bei der definierten historischen Zeitspanne um eine Zeitspanne einer zweiten Dauer vor einem Startzeitpunkt der Spracherfassungszeitspanne handelt.

7. Verfahren nach Anspruch 6, wobei die zweite Dauer 0,5 min bis 2 min beträgt.

8. Elektronische Vorrichtung, umfassend:
einen Speicher, der dazu konfiguriert ist, Anweisungen zu speichern, die durch einen oder mehrere Prozessoren der elektronischen Vorrichtung ausgeführt werden; und
einen Prozessor, wobei, wenn der Prozessor die Anweisungen in dem Speicher ausführt, die elektronische Vorrichtung in die Lage versetzt wird, das Verfahren nach einem der Ansprüche 1 bis 7 durchzuführen.

9. Computerlesbares Speichermedium, wobei das computerlesbare Speichermedium Anweisungen speichert; und, wenn die Anweisungen auf einem Computer ausgeführt werden, der Computer in die Lage versetzt wird, das Verfahren nach einem der Ansprüche 1 bis 7 durchzuführen.

## Revendications

1. Procédé d'interaction vocale, appliqué à un dispositif électronique, dans lequel le procédé comprend :
la réalisation d'une interaction vocale avec un premier utilisateur, et la collecte, dans une période de temps de collecte vocale de l'interaction vocale, d'un premier signal audio dans une plage angulaire dans laquelle se trouve le premier utilisateur, et un second signal audio dans une plage angulaire dans laquelle se trouve un second utilisateur, dans lequel le second utilisateur est un utilisateur qui réalise une interaction vocale avec le dispositif électronique dans une période de temps historique spécifiée ;
le fait de déterminer si un moment de début d'un premier signal vocal dans le premier signal audio se situe dans une première période de temps, et la détermination d'un signal vocal cible à partir du premier signal vocal et d'un second signal vocal sur la base d'un résultat de détermination, dans lequel le second signal vocal est un signal vocal compris dans le second signal audio, et la première période de temps est une période de temps de première durée après un moment de début de la période de temps de collecte vocale ; et
la réponse au signal vocal cible ;
le procédé étant également **caractérisé en ce que** au moins l'un du moment de début du premier signal vocal et d'un moment de début du second signal vocal se situe dans la première période de temps ; et
la détermination d'un signal vocal cible à partir du premier signal vocal et d'un second signal vocal sur la base d'un résultat de détermination comprend :
si le moment de début du premier signal vocal se situe dans la première période de temps, la détermination du premier signal vocal comme étant le signal vocal cible ; sinon, la détermination du signal vocal cible sur la base d'un état de chevauchement entre le second signal vocal et le premier signal vocal dans le temps.

2. Procédé selon la revendication 1, dans lequel la détermination du signal vocal cible sur la base d'un état de chevauchement entre le second signal vocal et le premier signal vocal dans le temps comprend :
si le second signal vocal et le premier signal vocal se chevauchent dans le temps, la détermination du premier signal vocal comme étant le signal vocal cible ; ou
si le second signal vocal et le premier signal vocal ne se chevauchent pas dans le temps, la détermination du second signal vocal comme étant le signal vocal cible.

3. Procédé selon la revendication 1, dans lequel la première durée est déterminée sur la base d'une valeur d'intention d'interaction P du premier utilisateur et/ou d'une quantité M d'interactions entre le premier utilisateur et le dispositif électronique sur une période de temps spécifiée, dans lequel la valeur d'intention d'interaction P représente une intention du premier utilisateur de réaliser une interaction vocale avec le dispositif électronique.

4. Procédé selon la revendication 3, dans lequel la valeur d'intention d'interaction P est déterminée sur la base d'un angle de visage du premier utilisateur et/ou d'une distance entre le premier utilisateur et le dispositif électronique.

5. Procédé selon la revendication 1, dans lequel le second signal vocal ne comprend pas de mot d'activation du dispositif électronique.

6. Procédé selon la revendication 1, dans lequel la période de temps historique spécifiée est une période de temps d'une seconde durée avant un moment de début de la période de temps de collecte vocale.

7. Procédé selon la revendication 6, dans lequel la seconde durée est de 0,5 min à 2 min.

8. Dispositif électronique, comprenant :
une mémoire, configurée pour stocker des instructions exécutées par un ou plusieurs processeurs du dispositif électronique ; et
un processeur, dans lequel, lorsque le processeur exécute les instructions dans la mémoire, le dispositif électronique est activé pour réaliser le procédé selon l'une quelconque des revendications 1 à 7.

9. Support de stockage lisible par ordinateur, dans lequel le support de stockage lisible par ordinateur stocke des instructions ; et lorsque les instructions sont exécutées sur un ordinateur, l'ordinateur est activé pour réaliser le procédé selon l'une quelconque des revendications 1 à 7.
